# EUROPÄISCHE PATENTSCHRIFT

(11) **EP 3 362 503 B1**
(45) Veröffentlichungstag und Bekanntmachung des Hinweises auf die Patenterteilung: **25.06.2025**
(21) Anmeldenummer: 16781774.1
(22) Anmeldetag: 13.10.2016
(51) Int. Cl.: C08G 69/46, C08G 73/10

(54) **KOAGULIERBARE POLYMERLÖSUNG MIT DARIN GELÖSTEN AROMATISCHEN HOCHLEISTUNGSPOLYMEREN, EIN VERFAHREN ZU DEREN GEWINNUNG UND DEREN VERWENDUNG**
COAGULABLE POLYMER SOLUTION WITH AROMATIC HIGH-PERFORMANCE POLYMERS DISSOLVED IN THE SOLUTION, METHOD FOR OBTAINING SAME, AND USE THEREOF
SOLUTION POLYMÈRE COAGULABLE CONTENANT DES POLYMÈRES HAUTE PERFORMANCE AROMATIQUES DISSOUS, SON PROCÉDÉ DE PRODUCTION ET SON UTILISATION

(30) Priorität: 16.10.2015 DE 102015117682
(43) Veröffentlichungstag der Anmeldung: 22.08.2018
(73) Patentinhaber: Fuchshuber Techno-Tex GmbH, 72805 Lichtenstein (DE)
(72) Erfinder: VOIS, Jörg, 72762 Reutlingen (DE); GÄHR, Frank, 73730 Esslingen (DE); HERMANUTZ, Frank, 71229 Leonberg (DE)
(74) Vertreter: Meissner Bolte Partnerschaft mbB
(86) Internationale Anmeldenummer: PCT/EP2016/074594
(87) Internationale Veröffentlichungsnummer: WO 2017/064188

(56) Entgegenhaltungen:
- EP-B1- 3 131 954
- US-A1- 2011 152 413
- US-A1- 2011 152 413
- US-A1- 2011 250 162
- US-A1- 2011 250 162
- JAEWOONG LEE ET AL: "Antimicrobial Polymeric Materials; Cellulose and m-Aramid Composite Fibers", vol. 2, no. 4, 1 January 2007 (2007-01-01), pages 25 - 32, XP002727298, ISSN: 1558-9250, Retrieved from the Internet <URL:http://www.jeffjournal.org/papers/Volume2/Lee-718R1.pdf> [retrieved on 20140716]
- TINGTING ZHAO ET AL: "The Preparation and Characterization of Poly(m-phenylene- isophthalamide) Fibers Using Ionic Liquids", INT. J. MOL. SCI., vol. 8, no. 7, 17 July 2007 (2007-07-17), pages 680 - 685, XP055623914, ISSN: 1661-6596, DOI: 10.3390/i8070680
- JAEWOONG LEE ET AL: "Antimicrobial Polymeric Materials; Cellulose and m-Aramid Composite Fibers", vol. 2, no. 4, 1 January 2007 (2007-01-01), pages 25 - 32, XP002727298, ISSN: 1558-9250, Retrieved from the Internet <URL:http://www.jeffjournal.org/papers/Volume2/Lee-718R1.pdf> [retrieved on 20140716]

## Beschreibung

Die Erfindung betrifft eine nass- und trocken-nass-koagulierbare, insbesondere nass- und trocken-nass-verspinnbare Polymerlösung auf der Basis ionischer Flüssigkeiten und mit einem Gehalt an darin gelösten aromatischen Hochleistungspolymeren in Form von m-Aramiden, aromatischen Polyamidimiden, aromatischen Polyimiden als Poly(4,4-diphenylmethan-co-toluylenbenzophenontetra-carboxylimid) und/oder Polybenzimidazol, die mit der ionischen Flüssigkeit aus schadstoffhaltigen textilen Fasermaterialien, insbesondere aus textilen Faserabfällen, herausgelöst wurden, ein Verfahren zur Herstellung dieser Polymerlösung durch Aufarbeitung textiler Fasermaterialien, die aromatische Hochleistungspolymere enthalten, insbesondere zur Gewinnung der bezeichneten koagulierbaren Polymerlösung, sowie deren Verwendung zur Herstellung von Fasern durch Nass- oder Trocken-Nass-Verspinnen sowie von Folien, Membranen und Beschichtungen.

Die genannten Polymere zählen zu den sogenannten Hochleistungspolymeren. Als Fasern haben sie in der Textilindustrie eine große Bedeutung in Bereichen gewonnen, in denen hohe Ansprüche an die Flammbeständigkeit eines Textils gestellt werden, da sie als inhärent flammhemmend gelten. Kennzeichnend für dieses Merkmal ist im Allgemeinen der sogenannte Limiting Oxygen Index (LOI). Dieser beträgt für inhärent flammhemmende Fasern mindestens 28.

Aromatische Polyamide, die auch kurz als Aramide bezeichnet werden, können grundsätzlich in meta-Aramide und para-Aramide unterschieden werden. Die Bezeichnung m-Aramid besagt, dass die Verknüpfung innerhalb einer Kette zwischen den einzelnen aromatischen Ringen in meta-Stellung erfolgt, anders als bei dem p-Aramid, wo die para-Stellung gilt. Zu den meta-Aramiden zählen insbesondere das Poly(m-phenylenisophthalamid) und zu den para-Aramiden insbesondere das Poly(p-phenylenterephthalamid). Bekannt sind insbesondere die von der Firma DuPont unter der Marke NOMEX^{®} vertriebenen Fasern: Hierbei handelt es sich um hitze- und flammbeständige Fasern, die in Schutzkleidungsmaterialien, Schutzkleidung, Elektroisolierpapier und anderen Hochleistungsanwendungen zum Einsatz kommen, um Menschen und von diesen durchgeführte Prozesse zu schützen. NOMEX^{®} ist eine inhärent flammfeste Faser, die eine hohe Temperaturbeständigkeit besitzt und nicht schmilzt, nicht abtropft und die Verbrennung in Luft unterstützt. Sie ist verfügbar als Papier, Filz, Gewebe und Fasern. Die bekannten NOMEX^{®}-Fasern beruhen im Wesentlichen auf meta-Aramid, während die Firma DuPont ebenfalls para-Aramide vertreibt, dies unter der Marke KEVLAR^{®}, Am Markt erhältlich ist zum Beispiel NOMEX T-450^{®} als eine Stapelfaser aus 100% meta-Aramid, NOMEX T-455^{®}, bestehend aus einer Stapelfasermischung aus 95% NOMEX^{®} und 5% KEVLAR^{®}, sowie NOMEX T-462^{®}, enthaltend eine Fasermischung aus 93% NOMEX^{®}, 5% KEVLAR^{®} und 2% einer mit Polyamid ummantelten Carbonfaser. Des Weiteren werden Fasern aus meta- und para-Aramid im asiatischen Raum in größeren Mengen produziert.

Polyamidimide sind im Allgemeinen über die Reaktion von Phthalsäure- oder Trimellithsäureanhydrid und aromatischen Diisocyanaten, wie zum Beispiel Toluylendiisocyanat oder p,p'-Dichlordiphenylethern, zugänglich. Gemäß dem Official Journal of the European Union vom 28.10.2011 werden einige Polyamidimidfasern, wie zum Beispiel die Kermel^{®}-Faser, ebenfalls der Klasse der Aramide zugeordnet.

Eine Polyimidfaser wird unter der Marke P 84^{®}, entwickelt von der Lenzing AG, derzeit von der Firma Evonik GmbH in den Handel gebracht (bestehend aus Poly(4,4'-diphenylmethan-co-toluylenbenzophenontetracarboxy-limid)). Das Polybenzimidazol (PBI) ist durch Kondensation von Diphenylisophthalat und Tetraaminobiphenyl zugänglich.

Die oben bezeichneten Hochleistungspolymere bzw. Faserpolymere aus Aramid, Polyimid und Polybenzimidazol werden stets aus der Lösung versponnen. Mit Ausnahme von para-Aramid, das aus konzentrierter Schwefelsäure versponnen wird, dienen als Lösungsmittel regelmäßig Dimethylformamid (DMF) oder Dimethylacetamid (DMA). Die Verspinnung der genannten Polymerlösungen erfolgt, mit Ausnahme des PBI, das im Trockenspinnprozess zu Fasern gesponnen wird, üblicherweise in einem Nassspinnverfahren mittels geeigneter Spinndüsen, die in ein Fällbad eintauchen, wobei das Faserpolymer koaguliert. Durch Verstrecken und Trocknung wird die Konsolidierung zu einer Faser mit geeigneten mechanischen Eigenschaften erzielt. Zum Stand der Technik bezüglich Synthese, Lösungsherstellung und Verspinnung sei zum Beispiel verwiesen auf H. F. Mark, N. M. Bikales, C. Ovrberger, G. Menges, J. I. Kroschwitz (eds): Enzyclopedia of Polymer Science and Engineering, Vol. 11, John Wiley & Sons, Inc., 1988.

Die oben bezeichneten Spinnlösungsmittel Dimethylformamid und Dimethylacetamid sind unter toxikologischen Gesichtspunkten höchst bedenklich: DMF ist mittlerweile als CMR-Stoff gelistet (= karzinogen, mutagen, reproduktionsschädigend). Der Umgang mit DMF in industriellem Maße ist daher höchst problematisch. Auch Stoffe, die mehr als 1% DMF enthalten, fallen in die Kategorie der CMR-Kennzeichnung. DMA unterliegt der REACh-Kennzeichnungspflicht und ist hinsichtlich seiner Toxizität sehr bedenklich.

Weiterhin wird in der Produktion von Hochleistungsfasern zum Teil noch Dimethylimidazolidinon, kurz DMI oder als Synonym Dimethylethylenharnstoff, verwendet, welcher ein zumindest ebenso kritisches Potenzial auf Organismen entfaltet wie DMF oder DMA.

So ist es bekannt, dass Fasern, die auf aromatische Hochleistungspolymere zurückgehen und aus DMF, DMA oder DMI versponnen wurden, noch schädliche Restmengen an dem Spinnlösungsmittel enthalten. Diese verbliebenen toxischen Schadstoffe zwingen die Hersteller zu intensiven und teuren Nachbehandlungen der Fasern, um den Restgehalt hieran auf ein tolerierbares Maß zu reduzieren. Die erforderlichen Investitionen in aufwändige Abluft- und Abwasserreinigungsmaßnahmen in der Produktion erschweren die Konkurrenzfähigkeit der jeweiligen Faserpolymere im Vergleich zu anderen Hochleistungsfasern, die zum Beispiel über eine thermoplastische Herstellung zugänglich sind.

Ein weiteres auftretendes Problem stellt sich in der Verwertung von Faserabfällen dar, die auf den genannten Hochleistungspolymeren mit den einbezogenen Schadstoffen beruhen. Eine Verwertung durch rein mechanische Aufbereitung der Faserabfälle durch Erzeugung von z.B. Faserflocken oder wiedernutzbaren Vliesstoffprodukten ist nicht möglich, da die erzeugten Produkte dann gleichfalls mit Restlösungsmittelgehalten verunreinigt sind. Gleichzeitig ist die mechanische Aufarbeitung bei Fasermischungen mit Hochfestfaseranteilen, wie aus para-Aramid, oft schwierig und kostenintensiv. Die als Reste anfallenden Faserabfälle können, da sie inhärent flammfest bzw. nicht brennbar sind und zudem eine hohe Temperaturbeständigkeit besitzen, nicht in einer Müllverbrennungsanlage verbrannt werden. Vielmehr müssen sie sehr kostspielig endgelagert werden, was für die Verarbeiter dieser Fasern große wirtschaftliche Probleme aufwirft.

Die Erfindung hat sich daher die Aufgabe gestellt, technische Vorschläge zu unterbreiten, nach denen textile Fasermaterialien bzw. -abfälle, die auf den bezeichneten Hochleistungspolymeren beruhen und toxische Schadstoffe in Form von restlichen Spinnlösungsmitteln enthalten bzw. der CMR-Einstufung unterliegen, in eine vorteilhafte, koagulierbare, insbesondere verspinnbare Polymerlösung zu überführen. Damit sollen die mit Schadstoffen beladenen ursprünglichen Fasermaterialien bzw. -abfälle einer nützlichen Wiederverwertung, so zur Herstellung von Fasern, Folien, Membranen und Beschichtungen, herangezogen werden können, insbesondere durch ein Nass- oder Trocken-Nass-Koagulieren oder - Verspinnen. Die nach diesem Anschlussverfahren hergestellten Erzeugnisse sollen demzufolge keinerlei toxische Schadstoffe oder allenfalls einen vernachlässigbaren Gehalt daran aufweisen.

Gelöst wird diese Aufgabe durch eine nass- und auch trocken-nass-koagulierbare, insbesondere nass- und auch trocken-nass-verspinnbare Polymerlösung auf der Basis ionischer Flüssigkeiten und mit einem Gehalt an darin gelösten aromatischen Hochleistungspolymeren in Form von m-Aramiden, aromatischen Polyamidimiden, aromatischen Polyimiden als Poly(4,4-diphenylmethan-co-toluylenbenzophenontetra-carboxylimid) und/oder Polybenzimidazol, die mit der ionischen Flüssigkeit aus schadstoffhaltigen textilen Fasermaterialien, insbesondere textilen Faserabfällen, herausgelöst wurden, wobei die Polymerlösung 70 bis 95 Gew.-% ionische Flüssigkeit, 3 bis 15 Gew.-% der Hochleistungspolymere und mehr als 0,01 Gew.-% und weniger als 7 Gew.-%, insbesondere 0,01 bis 3 Gew.-% toxische Schadstoffe enthält. Die toxischen Schadstoffe weisen dabei eine Toxizität von 0,500 mg/kg bis 15.000 mg/kg, gemessen nach dem oralen LD 50-Wert (Ratte), auf und liegen in Form restlicher Spinnlösungsmittel vor, die auf die Herstellung textiler Fasermaterialien zurückgehen. Die Polymerlösung weist insbesondere eine Nullviskosität von 1,5 bis 30.000 Pa.s auf.

Bei strukturviskosen Flüssigkeiten, wie auch im vorliegenden Fall, wie sie bei Schmelzen und konzentrierten Lösungen von linearen, unverzweigten Polymeren vorliegen, konvergiert die Viskosität bei kleinem Geschwindigkeitsgefälle gegen einen konstanten Wert, die sogenannte Nullviskosität. Die Nullviskosität kann mit Hilfe eines gängigen Rheometers, zum Beispiel mit Platte-Platte-Anordnung, bestimmt werden. Bevorzugt ist eine Oszillationsmessung mit einer für Polymerlösungen geeigneten geometrischen Anordnung der Prüfkörper. Diesbezüglich sei verwiesen auf Pahl M., Gleißle W., Laun H.-M: "Praktische Rheologie der Kunststoffe und Elastomere", VDI Gesellschaft Kunststofftechnik, 1995, S. 137-144. Die Nullviskosität (hier gemessen bei 70°C) hat für die vorliegende Erfindung eine Bedeutung. Dem Fachmann sind jedoch auch ohne deren Angabe hinlängliche Anweisungen geben, um die Erfindung erfolgreich umzusetzen, was auch aus den nachfolgenden Betrachtungen ersichtlich ist.

Demzufolge wurde überraschenderweise gefunden, dass die gestellte Aufgabe in besonders vorteilhafter Weise dadurch gelöst wird, indem die Herstellung der Lösung der genannten Hochleistungspolymere mit Hilfe geeigneter ionischer Flüssigkeiten erfolgt, wobei die Polymerlösung in besonders vorteilhafter Weise nass- und trocken-nass-koaguliert weiterverarbeitet bzw. nass- und trocken-nassversponnen werden kann.

Bei der Durchführung der Erfindung gibt es keine relevante Beschränkung auf die Art der ionischen Flüssigkeit. Es ist bevorzugt, wenn ionische Flüssigkeiten gemäß der allgemeinen Formel [Q+]ₙ[Z]ⁿ⁻ eingesetzt werden, wobei das Kation [Q+]ₙ ein quaterniertes Ammonium-[R1R2R3R4N+], Phosphonium-[R1R2R3R4P+] oder Sulfonium-[R1R2R3S+]-Kation oder ein analoger quaternierter Stickstoff-, Phosphor- oder Schwefel-Heteroaromat der folgenden Formeln (I), (II), (III), (IV), (V) und (VI) 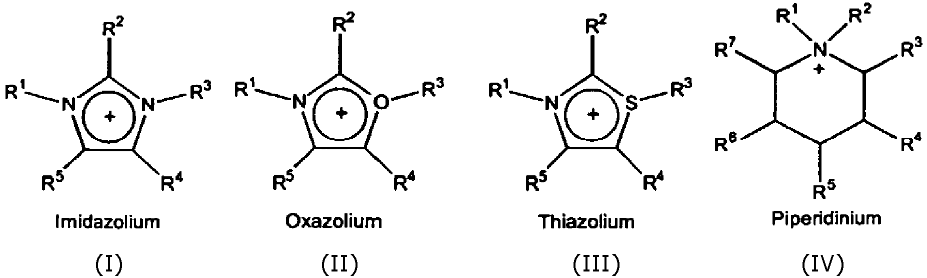 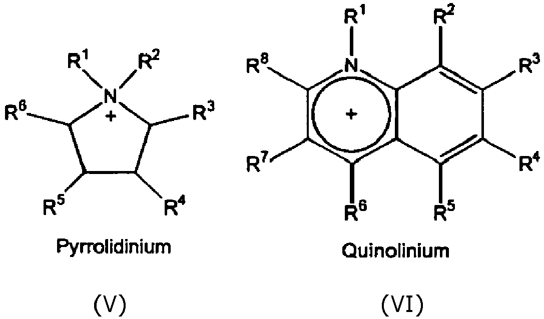 darstellt, wobei die Reste R1, R2, R3, R4 bzw. die Reste R1 bis R8 in den Formeln (I) bis (VI) unabhängig voneinander lineare, zyklische, verzweigte, gesättigte oder ungesättigte Alkylreste, mono- oder polycyclische, aromatische oder heteroaromatische Reste oder mit weiteren funktionellen Gruppen substituierte Derivate dieser Reste sind, wobei R1, R2, R3 und R4 untereinander verbunden sein können, wobei das Anion [Z]ⁿ⁻ in Form eines Halogenids, Pseudohalogenids, Amids, in Form von Phosphorverbindungen oder Nitroverbindungen vorliegt.

Eine Ausbildung dieser im Rahmen der Erfindung besonders vorteilhaften ionischen Flüssigkeiten ist darin zu sehen, dass die Halogenide bzw. Pseudohalogenide die Formel F⁻, Cl⁻, Br⁻, I⁻, BF₄⁻, PF₆⁻, AlCl₄⁻, Al₂Cl₇⁻, Al₃Cl₁₀⁻, AlBr₄, FeCl₄⁻, BCl₄⁻, SbF₆⁻, AsF₆⁻, ZnCl₃⁻, SnCl₃⁻, CuCl₂⁻, CF₃SO₃⁻, (CN)₂N⁻, (CF₃SO₃)₂N⁻, CF₃CO₂⁻, CCl₃CO₂⁷, CN⁻, SCN⁻, OCN⁻, die Phosphorverbindungen Phosphate der Formel PO₄³⁻, HPO₄²⁻, H₂PO₄⁻, R¹PO₄²⁻, HR¹PO₄⁻, R¹R²PO₄⁻; Phosphonate und Phosphinate der Formel: R¹HPO₃⁻, R¹R²PO₂⁻, R¹R²PO₃⁻; Phosphite der Formel: PO₃³⁻, HPO₃²⁻, H₂PO₃⁻, R¹PO₃²⁻, R¹HPO₃⁻, R¹R²PO₃⁻; sowie Phosphonite und Phosphinite der Formel: R¹R²PO₂⁻, R¹HPO₂⁻, R¹R²PO⁻, R¹HPO⁻ darstellen.

Von weitergehendem Vorteil ist es, wenn der Alkylrest in Form eines C₁-C₁₈-Alkylrestes, insbesondere eines Alkylrestes mit 1 bis 4 Kohlenstoffatomen, vorzugsweise eines Methyl-, Ethyl-, 1-Propyl-, 2-Propyl-, 1-Butyl-, oder 2-Butylrestes vorliegt, der cyclische Alkylrest in Form eines C₃₋₁₀-Cycloalkylrestes, insbesondere in Form eines Cyclopropyl-, Cyclobutyl-, Cyclopentyl- oder Cyclohexyl-Restes vorliegt, der ungesättigte Alkylrest in Form eines Vinyl, 2-Propenyl, 3-Butenyl, cis-2-butenyl, trans-2-butenyl-Restes vorliegt, der aromatische Rest in Form eines Phenyl- oder Naphthyl-Restes vorliegt, der mit 1 bis 3 Halogenatomen, Alkylresten mit 1 bis 4 Kohlenstoffatomen oder Phenyl-Resten substituiert sein kann, und der heteroaromatische Rest in Form eines O-, S- oder N-enthaltenden heterocyclischen Restes mit 2 bis 5 Kohlenstoffatomen vorliegt. Als besonders vorteilhaft hat es sich erwiesen, als ionische Flüssigkeit [EMIM] [DCA], [EMIM] [Cl], [EMIM] [SCN], [EMIM] [Acetat], [EMIM] [DEP] und/oder [MMIM] [DMP] eingesetzt werden. Darin haben die Abkürzungen folgende Bedeutung: EMIM = Ethylmethylimidazolium; [MMIM] = Dimethylimidazolium; [DCA] = Dicyanamid; [DMP] = Dimethylphosphat; [DEP] = Diethyl-phosphat; BMIM = 1-Butyl-3-methylimid-azolium; OMIM = 1-Octyl-3-methyl-imidazolium. Folgende ionische Flüssigkeiten haben sich im Rahmen der praktischen Ausübung der Erfindung als besonders vorteilhaft erwiesen: das 1,3-Dimethylimidazolium-, 1,2,3-Trimethylimidazolium-, 1-Butyl-3-methylimidazolium-, 1-Butyl-2,3-dimethyl-imidazolium-, 1-Ethyl-3-me-thylimidazolium- und/oder 1-Octyl-3-methylimidazoliumsalz.

Allgemein kann ausgeführt werden, dass es bevorzugt ist, wenn die ionische Flüssigkeit ein Imidazolium-, Pyridinium-, Pyrazolium-, Pyrimidinium-, Pyrazinium- und/oder Pyridazinium-Salz darstellt.

Erfindungsgemäß enthält die Polymerlösung 95 bis 70 Gew.-%, insbesondere 95 bis 85 Gew.-%, ionische Flüssigkeit enthält, ganz besonders bevorzugt 93 bis 88 Gew.-%. In der Polymerlösung gelöst können sich weitere Verbindungen finden. Dabei kann es sich z.B. handeln um Cellulose, beispielsweise in Form von Baumwolle oder Celluloseregeneratfasern, wie Viskose-, Modal- oder Lyocellfasern. Die Celluloseregeneratfasern können gegebenenfalls weitere Zusatzstoffe, wie insbesondere Flammschutzadditive, enthalten. Auch die Verwendung von Wolle ist nicht ausgeschlossen. Aus entsprechenden Fasermischabfällen, in denen die hier benannten Fasern neben m-Aramiden enthalten sind, können Mischformkörper oder Polymerblends in Form von Fasern, Folien, Membranen oder Beschichtungen hergestellt werden. Näheres hierzu ist im folgenden Beispiel 4 offenbart. Ferner ist hier der Einbezug von Cellulosederivaten, insbesondere von Celluloseacetat, - propionat, -butyrat und/oder -carbamat, mit Vorteil möglich.

Weiteres zu den ionischen Flüssigkeiten: Ionische Flüssigkeiten weisen vorzugsweise eine hohe Stabilität auf und haben besonders bevorzugt eine Zersetzungstemperatur oberhalb von 400°C, dies gilt beispielsweise insbesondere für Dialkylamidazolium- und Alkylpyrridinium-Salze, insbesondere für das 1-Alkyl-3-methyldimethazolium-Salz.

Die Temperaturbeständigkeit der ionischen Flüssigkeit wird im Rahmen der Erfindung in Abhängigkeit vom Fließverhalten der Lösung des Polymers in der ionischen Flüssigkeit gewählt. Vorzugsweise beträgt die Temperaturbeständigkeit der ionischen Flüssigkeit etwa 70°C bzw. 150°C. Besonders bevorzugt sind die ionischen Flüssigkeiten Ethylmethylimidazolium-diethylphosphat (EMIM-DEP) und Ethylmethylimidazolium-chlorid (EMIM Cl). Es hat sich hier gezeigt, dass m-Aramid, Polyamidimid, Polyimid und Polybenzimidazol in EMIM-DEP besonders gut in Lösung bringen lassen.

Grundsätzlich kann die Konzentration des Hochleistungspolymers in ionischen Flüssigkeiten in weiten Bereichen eingestellt werden. Erfindungsgemäß enthält die koagulierbare bzw. verspinnbare Polymerlösung 3 bis 15 Gew.-%, insbesondere 3 bis 12 Gew.-%, Hochleistungspolymere.

Im Hinblick darauf, dass die erfindungsgemäße Polymerlösung nass- oder trocken-nass-koaguliert oder -versponnen werden soll, erlangt die Nullviskosität eine besondere Bedeutung. So liegt sie im Rahmen der Erfindung insbesondere zwischen 1,5 und 30.000 Pa.s. Es ist bevorzugt, dass die erfindungsgemäße Polymerlösung zum Zwecke des Verspinnens eine Nullviskosität von 10 bis 2.000 Pa.s, insbesondere von 200 bis 2.000 Pa.s, und zum Zwecke des Koagulierens zur Herstellung von Folien, Membranen und Beschichtungen eine Nullviskosität von 1 bis 100, insbesondere von 2 bis 50 Pa.s, aufweist. Die mit einem Rheometer ermittelte Nullviskosität lässt sich in Abhängigkeit vom Hochleistungspolymer über die Konzentration und die Temperatur einregeln. Es handelt sich hier um eine fachbekannte Messmethode, die sich aus der Fachliteratur ergibt (sh. oben). Die Nullviskosität lässt sich, wie oben beschrieben, bestimmen. Anzumerken ist noch, dass die erfindungsgemäße Polymerlösung rheologisch ein strukturviskoses Verhalten zeigt.

Im Rahmen der Erfindung werden die aromatischen Hochleistungspolymere, insbesondere aus schadstoffhaltigen textilen Materialien, in der nachfolgend noch beschriebenen Weise herausgelöst. Dabei liegen die aromatischen Polyamide als meta-Aramid, insbesondere als Poly(m-phenylenisophthal-amid), und die aromatischen Polyimide als Poly(4,4'-diphenylmethan-co-toluylenbenzophenontetracarboxylimid) oder als Polybenzimidazol vor.

Der besondere Wert der Erfindung liegt darin, dass Schadstoffe bei der Aufarbeitung von schadstoffhaltigen textilen Materialien mit dem erfindungsgemäßen Verfahren, wie nachfolgend noch detailliert dargestellt, herausgelöst werden können. Dabei ist es wichtig, dass der Schadstoff und die aromatischen Hochleistungspolymeren gelöst werden und sich demzufolge in der koagulierbaren bzw. verspinnbaren Polymerlösung finden. Erfindungsgemäß liegt der Schadstoff in Form von restlichem Spinnlösungsmittel vor, das auf die Herstellung der Fasern der textilen Faserabfälle zurückgeht, insbesondere als Dimethylformamid (DMF), Dimethylacetamid (DMA), Tetramethylharnstoff (TMH), Dimethylsulfoxid (DMSO), Dimethylimidazolidinon (DMI) und/oder N-Methylpyrrolidon (NMP) vorliegt.

Die oben bezeichneten Schadstoffe bzw. toxischen restlichen Spinnlösungsmittel lassen sich im Hinblick auf ihre Toxizität wie folgt beschreiben: Sie zeigen eine Toxizität von 0,500 mg/kg bis 15.000 mg/kg, insbesondere von 0,900 mg/kg bis 7.500 mg/kg (gemessen nach dem oralen LD 50-Wert (Ratte)). Diesbezüglich sei auf die Literatur "Merck-Atlas for Toxicity" verwiesen.

Die erfindungsgemäße koagulierbare und verspinnbare Polymerlösung kann auch weitere Zusatzstoffe enthalten, dies gelöst, feinst dispergiert, oder auch emulgiert. Hierbei können z.B. folgende Zusätze in Frage kommen: Flammschutzadditive, Farbpigmente, Mattierungsmittel, antibakteriell oder antiviral wirkende Additive, gegen Vektoren wirksame Additive, elektromagnetische Strahlung absorbierende oder reflektierende Additive.

Gegenstand der Erfindung ist auch ein Verfahren zur Aufarbeitung textiler Faserabfälle, die Hochleistungspolymere in Form von m-Aramiden, aromatischen Polyamidimiden, aromatischen Polyimiden als Poly(4,4-diphenylmethan-co-toluylenbenzophenontetra-carboxylimid) und/oder Polybenzimidazolen sowie toxische Schadstoffe einer Toxizität von 0,500 mg/kg bis 15.000 mg/kg, gemessen nach dem oralen LD 50-Wert (Ratte), enthalten, zur Gewinnung einer koagulierbaren bzw. verspinnbaren Polymerlösung, wie vorstehend beschrieben, das dadurch gekennzeichnet ist, dass die textilen Fasermaterialien bzw. -abfälle, die restliche Spinnlösungsmittel als Schadstoff, insbesondere als toxischen Schadstoff, enthalten, bei Raumtemperatur bis zu 170°C mit einer ionischen Flüssigkeit, insbesondere unter Einwirkung von Scherkräften, gemischt werden, wobei das Verhältnis der Menge der textilen Faserabfälle zur Menge der ionischen Flüssigkeit so gewählt wird, dass in der koagulierbaren bzw. verspinnbaren Polymerlösung 70 bis 95 Gew.-%, vorzugsweise 85 bis 95 Gew.-% und besonders bevorzugt 88 bis 93 Gew.-% ionische Flüssigkeit, 3 bis 15 Gew.-%, insbesondere 3 bis 12 Gew.-% Hochleistungspolymere und mehr als 0,01 Gew.-% und weniger als 7 Gew.-%, vorzugsweise 0,01 bis 3 Gew.-% und insbesondere 0,01 bis 0,5 Gew.-% toxische Schadstoffe enthalten sind.

Die Art der erfindungsgemäß zur Entfernung in Betracht gezogenen toxischen Schadstoffe bzw. toxischen Spinnlösungsmittel wurde vorstehend bereits erörtert. Die Polymere der textilen Faserabfälle enthalten toxische Schadstoffe demnach in einer solchen Menge, dass diese in der koagulierbaren bzw. verspinnbaren Polymerlösung in einer Menge von mehr als 0,01 Gew.-% und/oder weniger als 7 Gew.-%, insbesondere weniger als 5 Gew.-%, vorzugsweise bis zu 3 Gew.-%, insbesondere von 0,01 bis 0,5 Gew.-%, vorliegen.

Im Rahmen der Erfindung verdient das Ausgangsmaterial in Form textiler Faserabfälle weitergehende Beachtung. Es wird bevorzugt, dass die textilen Fasermaterialien, insbesondere Faserabfälle aus der Faserausspinnung, der Garnspinnerei, der Strickerei, der Färberei und Ausrüstung stammen oder Konfektionsabfälle, insbesondere Schnittabfälle, darstellen. Nachfolgend wird auf übliche Materialzusammensetzungen der Verstrick- und Webartikel zu verwendenden Garnen mit meta-Aramid (handelsübliche Faserzusammensetzung) eingegangen:
Beispielhaft: Nomex^{®} Comfort (spinndüsengefärbt, mit Pigmenten), bestehend aus: 93% m-Aramid (Poly-Metaphenylenisophthalamid), 5% p-Aramid (Poly-Paraphenylenterephthalamid), 2% nicht konduktive antistatische Bikomponentenfaser, bestehend aus Carbonkern und einer Umhüllung aus Poly-Hexamethylenadipinamid; 95% m-Aramid (Poly-Metaphenylenisophthalamid), 5% p-Aramid (Poly-Paraphenylenterephthalamid); 67% m-Aramid (Poly-Metaphenylenisophthalamid), 23% p-Aramid (Poly-Paraphenylenterephthalamid); 100% m-Aramid (Poly-Metaphenylenisophthalamid).

Die erfindungsgemäßen Ausgangsmaterialien gehen insbesondere auch auf Abfälle im Produktionsprozess zurück. Bei der Herstellung der Fasern und bei der Faserausspinnung entstehen z.B. nicht unwesentliche Mengen an Abfällen an, dies durch Transmission der verschiedenen Batches, Farben, etc. Während der Herstellung der Garne und der Stapelfasergarne sowie in der Garnspinnerei entstehen Abfälle, die produktionsbedingt sind. In der Strickerei fallen, aufgrund unterschiedlicher Garnlängen auf den Spulen sowie Resten auf den Spulen, nicht zu verarbeitende Abfälle an. In der Färberei und Ausrüstung entstehen ebenfalls Abfälle, die durch das Kantenschneiden verursacht werden, wobei die Abfälle für das Projekt des Recyclings gesammelt werden.

Besonders bedeutsam sind bei der Verwirklichung der Erfindung Konfektionsabfälle: In der Konfektion fallen die größten Mengen an Schnittabfällen an. Die Stoffe (z.B. Webwaren oder Gestricke) werden auf Zuschneidetischen ausgelegt und die Schablonen der Bekleidungsteile auf den Stoff. Anhand der Schablonen werden die Teile ausgeschnitten, die anschließend zusammengefügt (genäht) werden. Beim Zuschnitt, trotz größter Minimierung von Abständen, fallen größere Mengen Schnittabfälle an. Diese werden seit Jahren gesammelt, so dass hiervon Mengen im Tonnenbereich vorliegen.

Das erfindungsgemäße Verfahren wird besonders vorteilhaft gestaltet, wenn bei dem beschriebenen Prozess des Auflösens der Hochleistungspolymere mit Einbezug der erörterten Schadstoffe, Scherkräfte zur Einwirkung kommen. Dies erfolgt beispielsweise dadurch, dass ein geeignetes Rührwerk oder ein Kneter zum Einsatz gelangen. Hierbei kommen vorzugsweise Scherkräfte in der Größenordnung von 1 bis 50.000 Pa.s, insbesondere von 10 bis 30.000 Pa.s, in Betracht.

Die Temperatur bei der Durchführung des erfindungsgemäßen Verfahrens, d.h. dem Mischen der bezeichneten Ausgangsmaterialien, liegt bei Raumtemperatur bis zu 170°C. Bevorzugt ist eine Temperatur von 85 bis 130°C, insbesondere von 100 bis 115°C.

In Einzelfällen kann die erfindungsgemäß erhaltene Polymerlösung unlösliche Bestandteile enthalten, was auch die Regel ist. Um die erfindungsgemäße Polymerlösung vorteilhaft weiterzuverarbeiten, insbesondere nass- oder trocken-nass zu koagulieren bzw. zu verspinnen, ist es hier zweckmäßig, die unlöslichen Bestandteile durch geeignete Maßnahmen abzutrennen. Dies kann beispielsweise durch übliche Filtration geschehen. Bei den unlöslichen Bestandteilen kann es sich insbesondere um Polypropylen-, Polyethylenterephthalat-, Polytetrafluorethlyen-, p-Aramid- und Kohlenstofffasern handeln.

Wie bereits vorstehend angesprochen, zeigen die erfindungsgemäßen Polymerlösungen den Vorteil, dass sie mit großem Nutzen zur Herstellung von Fasern durch Nass- oder Trocken-Nass-Verspinnen herangezogen werden können. Ebenfalls bedeutsam ist die Verwendung der erfindungsgemäßen Polymerlösung zur Herstellung von Folien, Membranen und Beschichtungen, dies nach üblichen Koagulationsverfahren, insbesondere durch Nass- oder Trocken-Nass-Koagulieren.

Gegenstand der Erfindung ist nicht nur die vorstehend detailliert dargestellte koagulierbare bzw. verspinnbare Polymerlösung bzw. ein Verfahren zu dessen Herstellung, sondern auch deren spezielle Verwendung. Dabei kann es sich um die Herstellung von Fasern nach dem Nass- oder Trocken-Nass-Verspinnen, aber auch um die Herstellung von Folien, Membranen und Beschichtungen nach üblichen Koagulierverfahren handeln, insbesondere nach dem Nass- oder Trocken-Nass-Koagulieren. Im Anschluss daran werden Verfahrenserzeugnisse erhalten, die praktisch keinerlei toxische Schadstoffe oder allenfalls in nicht beachtenswerter Menge enthalten, so vorzugsweise in einer Menge von weniger als 20 ppm, insbesondere weniger als 5 ppm. Der besondere Vorteil der Erfindung liegt darin, dass ohne Weiteres auch der Wert von 3 ppm und insbesondere 1 ppm unterschritten werden kann.

Die nach dem erfindungsgemäßen Verfahren hergestellten Fasern, Folien, Membranen oder Beschichtungen weisen Gehalte an toxischen Schadstoffen, insbesondere z.B. DMF oder DMA, von sogar weniger als 1 ppm auf. Die Restmengen an ionischer Flüssigkeit in den konsolidierten und nachgewaschenen und gegebenenfalls verstreckten Produkten sind vernachlässigbar gering. Die sich in den Koagulationsbädern befindliche ionische Flüssigkeit kann nach bekannten Verfahren angereichert, destilliert und wieder zur Lösung der beschriebenen Hochleistungspolymere verwendet werden.

Demzufolge ist es erfindungsgemäß vorteilhaft, dass anhand der in der nass-in-nass- und trocken-in-nass-koagulierbaren bzw. -verspinnbaren Polymerlösung Fasern hergestellt werden können, bei denen der Anteil der bezeichneten Schadstoffe auf ein Minimum, praktisch 0, reduziert oder vernachlässigbar klein ist. Zum Zwecke der Faserherstellung ist es vorteilhaft, die Polymerlösungen in ein wässriges Fällbad zu Fasern, entweder nass-in-nass oder über einen Luftspalt trocken-in-nass zu verspinnen. Nass-in-nass bedeutet, dass die Spinndüse in das wässrige Koagulationsbad getaucht ist. Beim Verspinnen über einen Luftspalt wird beim Austritt der Polymerlösung aus der Düse zuvor noch ein Luftspalt passiert, der in der Regel eine Höhe von 1 bis 20 mm, bevorzugt von 5 bis 11 mm aufweist. Die beiden Verfahrensprinzipien sind dem Fachmann hinlänglich bekannt.

Zur Herstellung von Folienmembranen oder Beschichtungen aus den bezeichneten Hochleistungspolymeren werden die Polymerlösungen insbesondere auf ein geeignetes Trägermaterial aufgestrichen und die Folienmembran oder die Beschichtung anschließend durch Koagulation in einem wässrigen Fällbad ausgebildet. Als Trägermaterialien für Beschichtungen kommen verschiedene Substrate in Betracht. Vorzugsweise handelt es sich bei den Textilien um solche in Form von Geweben, Maschenwaren oder Vliesstoffen. Das Aufbringen der Polymerlösung auf das Grundsubstrat kann durch technisch gängige Verfahren erfolgen, wie z.B. mit Hilfe einer Rakel oder Walze. Das Herstellen der Folien kann auch über einen Gießprozess erfolgen.

Vorteilhafterweise lassen sich die strukturellen und mechanischen Eigenschaften der ausgebildeten Fasern, Membranen und Beschichtungen durch Veränderung des Koagulationsmediums direkt beeinflussen. Beispielsweise werden die mechanischen und elastischen Eigenschaften ausgebildeter Fasern durch die die Koagulation und Strukturbildung hinauszögernde Zusätze, wie insbesondere Glycerin, Ethylenglykol, 1,2-Propandiol, Polyethylenglykole, Polypropylenglykole oder andere sich dem Fachmann erschließende geeignete mehrwertige Alkohole oder Kohlenhydrate, zum Teil wesentlich verbessert. Auch die Porenstrukturen ausgebildeter Membranen oder Beschichtungen aus den bezeichneten Hochleistungspolymeren werden zum Teil im Sinne einer erhöhten Atmungsaktivität positiv beeinflusst.

Die Erfindung, wie oben beschrieben, löst die gestellte Aufgabe in überraschend günstigem Ausmaß. Die erfindungsgemäß hergestellten Fasern, Folien oder Membranen bzw. andere Formkörper weisen sämtlich sehr gute Flammfesteigenschaften auf, ausgedrückt durch den LOI-Wert. Der LOI-Wert ist ein Maß für die Güte der Flammschutzausrüstung (nach ASTM D2863-77). Er gibt den Grenzwert des Volumenbruchs an Sauerstoff in einem Sauerstoff/Stickstoff-Gasgemisch wieder, bei dem ein textiles Flächengebilde von oben nach unten gerade noch brennt. Je höher der LOI-Wert, desto besser ist der Flammschutzeffekt. Ab einem LOI von 24 spricht man von flammhemmenden und bei Werten von 27 und höher von selbstverlöschenden Eigenschaften. Die erfindungsgemäß hergestellten Fasern aus Aramid, Polyimid und Polybenzimidazol besitzen einen LOI von > 29. Nach dem Verfahren hergestellte Folienmembranen weisen ebenfalls LOI-Werte größer als 28 auf.

Die vorliegende Erfindung zeigt, wie oben dargestellt, vielfältige Vorteile. Insbesondere werden aus den beschriebenen Faserabfällen die toxischen Schadstoffe in eleganter Weise entfernt. Die erfindungsgemäße Polymerlösung ist vorteilhaft zu koagulieren bzw. zu verspinnen, wodurch die ursprünglich in den Faserabfällen enthaltenen Schadstoffe vollständig oder weitestgehend entfernt werden. Hierbei können Faserabfälle verwendet werden, die die angegebenen Hochleistungspolymere in Mengen bis zu 100% bzw. von 100% enthalten, wie auch Abfälle, die diese Polymere nur anteilig enthalten, zudem aber auch weitere Bestandteile, die in der ionischen Flüssigkeit nicht löslich, aber leicht abtrennbar sind. Bei diesen unlöslichen Bestandteilen kann es sich z.B. um solche auf Basis von Polypropylen, Polyethylenterephthalat, Polytetrafluorethylen, p-Aramid oder Kohlenstofffasern handeln. Sind solche Faseranteile in Mischungen mit einem oder mehreren der in der ionischen Flüssigkeit löslichen Hochleistungspolymeren enthalten, dann können diese leicht abgetrennt werden, so dass nach Abtrennung eine vorteilhafte Weiterverarbeitung zu Fasern, Filmen oder anderen Produkten (sh. oben) mit der Polymerlösung möglich ist. Demzufolge können schadstoffhaltige textile Materialien weiterverarbeitet werden, die die bezeichneten Hochleistungspolymere enthalten, aber damit auch im Gemisch unlösliche Mischfasern, d.h. *"Fremdfasern",* die nach der Abtrennung in Einzelfällen einer vorteilhaften Weiterverwendung zugänglich gemacht werden können.

Die Erfindung soll nachfolgend anhand von Beispielen noch näher erläutert werden:

### Beispiel 1 (Fasern)

In einem Kneter mit 10 Liter Fassungsvermögen werden 5 Liter Ethylmethylimidazolium-diethylphosphat (EMIM-DEP) vorgelegt und bei Raumtemperatur 733 g einer gerissenen Fasermischung aus 93% m-Aramid, 5% p-Aramid und 2% einer graphitummantelten Synthetikfaser aus Konfektionsabfall zugegeben. Der Gehalt an Dimethylacetamid (DMA) der Fasermischung wurde zu 0,44 Gew.-% ermittelt. Es wird auf 90°C erhitzt und der Knetprozess über 3 Stunden aufrechterhalten. Es wird eine Paste erhalten, in der die in EMIM-DEP unlöslichen Carbon- und p-Aramidfasern enthalten sind. Die Paste kann, sofern die Fasern oder das Textil eingefärbt waren, gegebenenfalls noch Farbstoffe oder Farbpigmente enthalten.

Die Filtration der ungelösten Faserteile erfolgte mit einem Vakuumfiltrationsgerät. Um die Viskosität möglichst gering zu halten, erfolgte die Filtration im heißen Zustand. Sukzessive wurden engere Maschenweiten eingesetzt:
1. Sieb: Metallgitter, Maschenweite ca. 1 mm
2. Drahtgewebe GKD Gebr. Kufferath (Düren), Maschenweite: 0,1 mm
3. Dreifach-Kombifilter, Maschenweite des kleinsten Filters: 10 µm

Nach der Filtration wurde eine homogene, gegebenenfalls gefärbte Lösung des m-Aramids in EMIM-DEP erhalten. Die in EMIM-DEP unlöslichen Faserbestandteile der eingesetzten Mischung, d.h. das p-Aramid sowie die Carbonfasern, verbleiben als Filterrückstand. Die Lösung des m-Aramids in EMIM-DEP in einer Konzentration von 8,6 Gew.-% wies eine Nullviskosität von 260 Pa.s auf (gemessen nach sh. oben) und zeigte ein strukturviskoses Verhalten.

Die Lösung wurde auf einer Spinnanlage nach dem sogenannten Air-Gap- oder Luftspaltspinnverfahren verarbeitet. Diese bestand aus einem beheizbaren Vorratsgefäß, einer Filtereinrichtung, einer 48-Loch-Spinndüse mit Einzellochdurchmessern von 60 µm. Der Luftspalt hatte eine Länge von 10 mm. Die Spinnlösungstemperatur betrug 70°C. Das Fällbad enthielt eine Mischung aus 95% Wasser und 5 Gew.-% EMIM-DEP. Die ersponnenen Filamente wurden über 2 beheizbare Galetten nachverstreckt bzw. getrocknet.

Es wurden blau-schwarz gefärbte Filamente in einer Feinheit von 2,2 dtex erhalten, mit einer Höchstzugkraft (gemessen nach DIN EN ISO 2062) von 30,4 cN/tex (gemessen nach EN ISO 2062) und einer Höchstzugkraftdehnung (gemessen nach DIN EN ISO 2062) von 35%. Der Gehalt an Dimethylacetamid der ersponnenen Fasern beträgt < 1 ppm.

### Beispiel 2 (Membranen)

In einen Dreihalsrundkolben, bestückt mit einem Propellerrührer, werden 240 g Ethylmethylimidazoliumdiethylphosphat (EMIM-DEP) vorgegeben. Hierzu werden unter langsamem Rühren 20 g einer Fasermischung aus 93% m-Aramid, 5% p-Aramid und 2% einer graphitummantelten Synthetikfaser aus Konfektionsabfall zugegeben. Die Temperatur des EMIM-DEP wurde auf 110°C eingestellt. Im Verlauf von 10 Stunden bildet sich eine filtrierbare Lösung aus, wobei die nicht gelösten Bestandteile analog dem in Beispiel 1 genannten Verfahren abfiltriert werden. Es resultiert eine 5,1 gew.-%-ige strukturviskose Lösung des m-Aramids mit einer Nullviskosität von 17 Pa.s.

Zur Herstellung von Membranen wurde diese Lösung auf eine Glasplatte gegeben und mittels einer Rakel mit einem Rakelspalt von 250 µm auf der Glasplatte ausgestrichen. Nach einer Verweildauer von 10 min erfolgte die Koagulation des Films in heißem destilliertem Wasser. Die nach der Koagulation ausgebildete Membran wurde zweimal mit Wasser gewaschen und anschließend getrocknet. Die Membran weist eine Schichtdicke von ca. 140 µm mit asymmetrischer Struktur auf. Die Wasserdampfdurchlässigkeit, bestimmt nach ASTM E96, beträgt 2.970 g/m² und Tag. Die Flammfestigkeit der ausgebildeten Membran, bewertet anhand des Limiting Oxygen Index nach ASTM 2863, beträgt 43. Der Gehalt an Dimethylacetamid der ersponnenen Fasern beträgt < 1 ppm.

### Beispiel 3 (Beschichtungen)

In einen Dreihalsrundkolben, bestückt mit einem Propellerrührer, werden 240 g Ethylmethylimidazoliumdiethylphosphat (EMIM-DEP) vorgegeben. Hierzu werden unter langsamem Rühren 37 g einer Fasermischung aus 93% m-Aramid, 5% p-Aramid und 2% einer graphitummantelten Synthetikfaser aus Konfektionsabfall (siehe Beispiel 1) zugegeben. Die Temperatur des EMIM-DEP wurde auf 110°C eingestellt. Im Verlauf von 24 Stunden bildet sich eine filtrierbare Lösung aus, wobei die nicht gelösten Bestandteile analog dem in Beispiel 1 genannten Verfahren abfiltriert werden. Es resultiert eine 9,7 gew.-%-ige strukturviskose Lösung des m-Aramids mit einer Nullviskosität von 24 Pa.s.

Die Lösung wurde mittels einer Rakel auf ein Polyamidgewebe (Kettatlas, Flächengewicht 100 g/m²) gestrichen und in 60°C heißem Wasser koaguliert. Der Gesamtverbund wurde anschließend an Luft getrocknet. Es bildet sich eine mit dem textilen Substrat eng verbundene Struktur des Aramids aus, die fingerförmige Kanäle mit einer Schichtdicke von etwa 100 µm aufweist. Die Wasserdampfdurchlässigkeit, bestimmt nach ASTM E96, beträgt 3.320 g/m² und Tag. Der Gehalt an Dimethylacetamid im enthaltenen Erzeugnis beträgt < 1 ppm.

### Beispiel 4 (Mischung m-Aramid/Viskose FR)

In einem Kneter mit 4 Liter Fassungsvermögen werden 2,5 Liter Ethylmethylimidazolium-diethylphosphat (EMIM-DEP) vorgelegt und bei Raumtemperatur 305 g einer Fasermischung, bestehend aus 50% m-Aramid und 50% Viskose FR aus Konfektionsabfall, zugegeben. Es wird auf 90°C erhitzt und der Knetprozess über 3 Stunden aufrechterhalten. Es wird eine homogene Lösung erhalten, die gegebenenfalls noch Farbstoffe oder Farbpigmente enthält. Der Gehalt an Dimethylacetamid der Fasermischung wurde zu 0,15 Gew.-% ermittelt.

Nach Filtration über ein Filterpaket mit 0,1 und 0,01 mm Maschenweite wurde eine homogene Lösung, bestehend aus m-Aramid und Viskose, in EMIM-DEP erhalten. Die Konzentration betrug 12,0 Gew.-%. Die Lösung wies eine Nullviskosität von 940 Pa.s auf und zeigte ein strukturviskoses Verhalten.

Die Lösung wurde analog Beispiel 1 auf einer Spinnanlage nach dem sogenannten Air-Gap- oder Luftspaltspinnverfahren verarbeitet und nachbehandelt.

Es wurden Filamente in einer Feinheit von 1,8 dtex erhalten mit einer Höchstzugkraft (gemessen nach DIN EN ISO 2062) von 21,0 cN/tex - und einer Höchstzugkraftdehnung (gemessen nach DIN EN ISO 2062) von 23%. Der Gehalt an Dimethylacetamid der ersponnenen Fasern beträgt < 1 ppm.

### Beispiel 5

Die aus Beispiel 1 gewonnenen Filamente wurden mittels eines Schneidmessers auf etwa 50 mm Faserlänge geschnitten. Die erhaltenen Stapelfasern wurden auf einer Krempel parallelisiert und anschließend zu einem Vliesstoff vernadelt. Das Flächengewicht des Vliesstoffs betrug 84 g/m², der LOI-Wert 31,2, Dimethylacetamid < 1 ppm.

### Beispiel 6

Die aus Beispiel 4 gewonnenen Filamente wurden mittels eines Schneidmessers auf etwa 50 mm Faserlänge geschnitten. Die erhaltenen Stapelfasern wurden nach der Krempel zu einem Ringgarn Nm 50/1 mit einer eingestellten Drehung von 110° verarbeitet. Die Höchstzugkraft des Garns betrug 18,2 cN/tex (Messung siehe oben), die Höchstzugkraftdehnung 6% (Messung siehe oben). Der Gehalt an Dimethylacetamid beträgt < 1 ppm.

Auf einer Rundstrickmaschine Typ Lawson Hemphill wurde aus dem Garn eine Strickware (Single-Jersey) hergestellt. Nadelzahl: 624, Kulierexzenter-Abstand 6,4 mm, Nadelzug: 2 Nd. Der LOI-Wert der Jersey-Ware betrug 23,2.

## Patentansprüche

1. Nass- und trocken-nass-koagulierbare, insbesondere nass- und trocken-nass-verspinnbare Polymerlösung auf der Basis ionischer Flüssigkeiten und mit einem Gehalt an darin gelösten aromatischen Hochleistungspolymeren in Form von m-Aramiden, von aromatischen Polyamidimiden, von aromatischen Polyimiden als Poly(4,4-diphenylmethan-co-toluylenbenzophenontetra-carboxylimid) und/oder von Polybenzimidazol, die mit der ionischen Flüssigkeit aus toxische Schadstoffe enthaltenden textilen Fasermaterialien herausgelöst wurden, wobei die toxischen Schadstoffe eine Toxizität von 0,500 mg/kg bis 15.000 mg/kg, gemessen nach dem oralen LD 50-Wert (Ratte), aufweisen und in Form restlicher Spinnlösungsmittel vorliegen, die auf die Herstellung textiler Fasermaterialien zurückgehen, und die Polymerlösung 70 bis 95 Gew.-% ionische Flüssigkeit, 3 bis 15 Gew.-% Hochleistungspolymere und mehr als 0,01 Gew.-% und weniger als 7 Gew.-% toxische Schadstoffe enthält.

2. Koagulierbare Polymerlösung nach Anspruch 1, **dadurch gekennzeichnet, dass** die textilen Fasermaterialien textile Faserabfälle darstellen.

3. Koagulierbare Polymerlösung nach Anspruch 1 oder 2, **dadurch gekennzeichnet, dass** diese 3 bis 12 Gew.-% Hochleistungspolymere enthält.

4. Koagulierbare Polymerlösung nach einem der Ansprüche 1 bis 3, **dadurch gekennzeichnet, dass** die Polymerlösung 85 bis 95 Gew.-%, insbesondere 88 bis 93 Gew.-% ionische Flüssigkeit, mehr als 0,01 Gew.-% und weniger als 5 Gew.-% toxische Schadstoffe, vorzugsweise 0,01 bis 3 Gew.-% und insbesondere 0,01 bis 0,5 Gew.-% enthält.

5. Koagulierbare Polymerlösung nach einem der Ansprüche 1 bis 3, **dadurch gekennzeichnet, dass** diese zum Zwecke des Verspinnens eine Nullviskosität von 10 bis 2.000 Pa.s und zum Zwecke des Koagulierens zur Herstellung von Folien, Membranen und Beschichtungen eine Nullviskosität von 1 bis 100 Pa.s aufweist, wobei die Nullviskosität bei 70°C mit einem Rheometer mit Platte-Platte-Anordnung gemessen wird.

6. Koagulierbare Polymerlösung nach mindestens einem der vorhergehenden Ansprüche, **dadurch gekennzeichnet, dass** die ionische Flüssigkeit ein Imidazolium-, Pyridinium-, Pyrazolium-, Pyrimidinium-, Pyrazinium- und/oder Pyridazinium-Salz darstellt.

7. Koagulierbare Polymerlösung nach mindestens einem der vorhergehenden Ansprüche, **dadurch gekennzeichnet, dass** die toxischen Schadstoffe in Form restlicher Spinnlösungsmittel vorliegen, die auf die Herstellung textiler Fasermaterialien zurückgehen, wobei die restlichen Spinnlösungsmittel insbesondere in Form von Dimethylformamid (DMF), Dimethylacetamid (DMA), Tetramethylharnstoff (TMH), Dimethylsulfoxid (DMSO), Dimethylimidazolidinon (DMI) und/oder N-Methylpyrrolidon (NMP) vorliegen.

8. Koagulierbare Polymerlösung nach mindestens einem der vorhergehenden Ansprüche, **dadurch gekennzeichnet, dass** die toxischen Schadstoffe bzw. die restlichen Spinnlösungsmittel eine Toxizität von 0,900 mg/kg bis 7.500 mg/kg aufweisen.

9. Verfahren zur Aufarbeitung textiler Fasermaterialien bzw. textiler Faserabfälle, die Hochleistungspolymere in Form von m-Aramiden, von aromatischen Polyamidimiden, von aromatischen Polyimiden als Poly(4,4-diphenylmethan-co-toluylenbenzophenontetra-carboxylimid) und/oder von Polybenzimidazolen sowie toxische Schadstoffe einer Toxizität von 0,500 mg/kg bis 15.000 mg/kg, gemessen nach dem oralen LD 50-Wert (Ratte), enthalten, zur Gewinnung einer koagulierbaren bzw. verspinnbaren Polymerlösung, **dadurch gekennzeichnet, dass** die textilen Fasermaterialien bzw. textilen Faserabfälle, die restliche Spinnlösungsmittel als toxischen Schadstoff enthalten, bei Raumtemperatur bis zu 170°C, insbesondere bei einer Temperatur von 85 bis 130°C, mit einer ionischen Flüssigkeit gemischt werden, wobei das Verhältnis der Menge der textilen Fasermaterialien bzw. textilen Faserabfälle zur Menge der ionischen Flüssigkeit so gewählt wird, dass in der erhaltenen koagulierbaren bzw. verspinnbaren Polymerlösung 70 bis 95 Gew.-%, vorzugsweise 85 bis 95 Gew.-% und besonders bevorzugt 88 bis 93 Gew.-% ionische Flüssigkeit, 3 bis 15 Gew.-%, insbesondere 3 bis 12 Gew.-% Hochleistungspolymere und mehr als 0,01 Gew.-% und weniger als 7 Gew.-%, vorzugsweise 0,01 bis 3 Gew.-% und insbesondere 0,01 bis 0,5 Gew.-% toxische Schadstoffe enthalten sind.

10. Verfahren nach Anspruch 9, **dadurch gekennzeichnet, dass** die textilen Fasermaterialien mit der ionischen Flüssigkeit unter Einwirkung von Scherkräften gemischt werden.

11. Verfahren nach mindestens einem der Ansprüche 9 oder 10, **dadurch gekennzeichnet, dass** textile Fasermaterialien bzw. -abfälle eingesetzt werden, die als toxischen Schadstoff Dimethylformamid (DMF), Dimethylacetamid (DMA), Tetramethylharnstoff (TMH), Dimethylsulfoxid (DMSO), Dimethylimidazolidinon (DMI) und/oder N-Methylpyrrolidon (NMP) enthalten.

12. Verfahren nach mindestens einem der Ansprüche 9 und 11, **dadurch gekennzeichnet, dass** die Hochleistungspolymere der textilen Fasermaterialien bzw. - abfälle die toxischen Schadstoffe bzw. die Spinnlösungsmittel in einer solchen Menge enthalten, dass sie nach dem Vermischen mit den ionischen Flüssigkeiten und der weitergehenden Aufarbeitung in der verspinnbaren Polymerlösung in einer Menge von mehr als 0,01 Gew.-% und weniger als 7 Gew.-% vorliegen, wobei die toxischen Schadstoffe in der verspinnbaren Polymerlösung insbesondere in einer Menge von 0,01 bis 5 Gew.-%, vorzugsweise in einer Menge von 0,01 bis 3 Gew.-%, insbesondere in einer Menge von 0,01 bis 0,05 Gew.-%, vorliegen.

13. Verfahren nach mindestens einem der Ansprüche 9 bis 12, **dadurch gekennzeichnet, dass** die textilen Fasermaterialien bzw. -abfälle aus der Faserausspinnung, der Garnspinnerei, der Strickerei, der Färberei und/oder Ausrüstung stammen oder Konfektionsabfälle darstellen, wobei es sich bei den Konfektionsabfällen insbesondere um Schnittabfälle handelt.

14. Verfahren nach mindestens einem der Ansprüche 9 bis 13, **dadurch gekennzeichnet, dass** als ionische Flüssigkeit ein Imidazolium-, Pyridinium-, Pyrazolium-, Pyrimidinium-, Pyrazinium- und/oder Pyridazinium-Salz eingesetzt wird.

15. Verfahren nach mindestens einem der Ansprüche 9 bis 14, **dadurch gekennzeichnet, dass** in der verspinnbaren Polymerlösung vorliegende unlösliche Bestandteile vor deren Weiterverarbeitung abgetrennt werden, wobei es sich bei den unlöslichen Bestandteilen insbesondere um Polypropylen-, Polyethylenterephthalat-, Polytetrafluorethylen-, p-Aramid- und/oder Kohlenstofffasern handelt.

16. Verfahren nach mindestens einem der Ansprüche 9 bis 15, **dadurch gekennzeichnet, dass** die koagulierbare bzw. verspinnbare Polymerlösung zusätzliche polymere Materialien und/oder Wolle gelöst enthält, um bei der Weiterverarbeitung durch Koagulieren oder Verspinnen Formkörper auf Basis von Mischpolymeren zu erhalten, wobei die zusätzlichen polymeren Materialien insbesondere in Form von Cellulose, Cellulosederivaten, Celluloseacetat, -propionat, -butyrat und/oder -carbamat vorliegen.

17. Verwendung der verspinnbaren Polymerlösung nach mindestens einem der Ansprüche 1 bis 8 zur Herstellung von Fasern durch Nass- oder Trocken-Nass-Verspinnen oder Verwendung der koagulierbaren Polymerlösung nach mindestens einem der Ansprüche 1 bis 8 zur Herstellung von Folien, Membranen und Beschichtungen durch Nass- oder Trocken-Nass-Koagulieren, wobei die erhaltenen Fasern, Folien, Membranen und Beschichtungen insbesondere einen Gehalt an toxischen Schadstoffen von weniger als 20 ppm aufweisen.

## Claims

1. A wet and dry-wet coagulable, in particular wet and dry-wet spinnable polymer solution based on ionic liquids and having a content of aromatic high-performance polymers dissolved therein in the form of m-aramids, of aromatic polyamide-imides, of aromatic polyimides as poly(4,4-diphenylmethane-co-toluylene benzophenone tetracarboxylimide) and/or of polybenzimidazole, which have been dissolved out of textile fiber materials containing toxic pollutants by means of the ionic liquid, wherein the toxic pollutants have a toxicity of 0.500 mg/kg to 15,000 mg/kg, measured according to the oral LD50 value (rat), and are present in the form of residual spinning solvents resulting from the manufacture of textile fiber materials, and wherein the polymer solution contains 70 to 95% by weight of ionic liquid, 3 to 15% by weight of high-performance polymers, and more than 0.01 % by weight and less than 7 % by weight of toxic pollutants.

2. The coagulable polymer solution according to claim 1, **characterized in that** the textile fiber materials are textile fiber waste.

3. The coagulable polymer solution according to claim 1 or 2, **characterized in that** it contains 3 to 12% by weight of high-performance polymers.

4. The coagulable polymer solution according to any one of the claims 1 to 3, **characterized in that** the polymer solution contains 85 to 95% by weight, in particular 88 to 93% by weight, of an ionic liquid, more than 0.01% by weight and less than 5% by weight of toxic pollutants, preferably 0.01 to 3% by weight and in particular 0.01 to 0.5% by weight.

5. The coagulable polymer solution according to any one of the claims 1 to 3, **characterized in that** it has a zero shear viscosity of 10 to 2,000 Pa.s for the purpose of spinning, and a zero shear viscosity of 1 to 100 Pa.s for the purpose of coagulating for the production of films, membranes, and coatings,
wherein the zero shear viscosity is measured at 70°C using a rheometer with a plate-plate arrangement.

6. The coagulable polymer solution according to at least any one of the preceding claims, **characterized in that** the ionic liquid is an imidazolium, pyridinium, pyrazolium, pyrimidinium, pyrazinium, and/or pyridazinium salt.

7. The coagulable polymer solution according to at least any one of the preceding claims, **characterized in that** the toxic pollutants are present in the form of residual spinning solvents resulting from the production of textile fiber materials, wherein the residual spinning solvents is present in particular in the form of dimethylformamide (DMF), dimethylacetamide (DMA), tetramethylurea (TMU), dimethylsulfoxide (DMSO), dimethylimidazolidinone (DMI), and/or N-methylpyrrolidone (NMP).

8. The coagulable polymer solution according to at least any one of the preceding claims, **characterized in that** the toxic pollutants or the residual spinning solvents have a toxicity of 0.900 mg/kg to 7,500 mg/kg.

9. A process for working up textile fiber materials or textile fiber waste containing high-performance polymers in the form of m-aramids, aromatic polyamide-imides, aromatic polyimides as poly(4,4-diphenylmethane-co- toluylene benzophenone tetracarboxylimide) and/or polybenzimidazoles as well as toxic pollutants with a toxicity of 0.500 mg/kg to 15,000 mg/kg, measured according to the oral LD50 value (rat), for obtaining a coagulable or spinnable polymer solution, **characterized in that** the textile fiber materials or textile fiber waste containing residual spinning solvents as toxic pollutants are mixed with an ionic liquid at room temperature up to 170°C, in particular at a temperature of 85 to 130°C, wherein the ratio of the amount of the textile fiber materials or textile fiber waste to the amount of the ionic liquid is selected, so that the coagulable or spinnable polymer solution obtained contains 70 to 95% by weight, preferably 85 to 95% by weight, and particularly preferably 88 to 93% by weight of ionic liquid, 3 to 15% by weight, in particular 3 to 12% by weight of high-performance polymers, and more than 0.01% by weight and less than 7% by weight, preferably 0.01 to 3% by weight, and in particular 0.01 to 0.5% by weight of toxic pollutants.

10. The process according to claim 9, **characterized in that** the textile fiber materials are mixed with the ionic liquid under the action of shearing forces.

11. The process according to at least any one of the claims 9 or 10, **characterized in that** textile fiber materials or waste are used which contain dimethylformamide (DMF), dimethylacetamide (DMA), tetramethylurea (TMH), dimethylsulfoxide (DMSO), dimethylimidazolidinone (DMI), and/or N-methylpyrrolidone (NMP) as toxic pollutant.

12. The process according to at least any one of the claims 9 and 11, **characterized in that** the high-performance polymers of the textile fiber materials or waste contain the toxic pollutants or the spinning solvents in such an amount that, after mixing with the ionic liquids and further reprocessing, they are present in the spinnable polymer solution in an amount of more than 0.01% by weight and less than 7% by weight, wherein the toxic pollutants are present in the spinnable polymer solution in particular in an amount of 0.01 to 5% by weight, preferably in an amount of 0.01 to 3% by weight, in particular in an amount of 0.01 to 0.05% by weight.

13. The process according to at least any one of the claims 9 to 12, **characterized in that** the textile fiber materials or wastes originate from fiber spinning, yarn spinning, knitting, dyeing, and/or finishing or are garment manufacturing waste, wherein the garment manufacturing waste is in particular cutting waste.

14. The process according to at least any one of the claims 9 to 13, **characterized in that** an imidazolium, pyridinium, pyrazolium, pyrimidinium, pyrazinium, and/or pyridazinium salt is used as the ionic liquid.

15. The process according to at least any one of the claims 9 to 14, **characterized in that** insoluble constituents present in the spinnable polymer solution are separated off before further processing thereof, wherein the insoluble constituents are in particular polypropylene, polyethylene terephthalate, polytetrafluoroethylene, p-aramid, and/or carbon fibers.

16. The process according to at least any one of the claims 9 to 15, **characterized in that** the coagulable or spinnable polymer solution contains additional polymeric materials and/or wool dissolved in order to obtain shaped bodies based on mixed polymers during further processing by coagulation or spinning, wherein the additional polymeric materials are present in particular in the form of cellulose, cellulose derivatives, cellulose acetate, cellulose propionate, cellulose butyrate, and/or cellulose carbamate.

17. A use of the spinnable polymer solution according to at least any one of the claims 1 to 8 for the production of fibers by wet or dry-wet spinning or use of the coagulable polymer solution according to at least one of the claims 1 to 8 for the production of films, membranes, and coatings by wet or dry-wet coagulation, wherein the fibers, films, membranes, and coatings obtained in particular have a content of toxic pollutants of less than 20 ppm.

## Revendications

1. Solution polymère coagulable par voie humide et par voie sèche-humide, en particulier filable par voie humide et par voie sèche-humide, à base de liquides ioniques et avec une teneur en polymères haute performance aromatiques dissous dans celle-ci sous forme de m-aramides, de polyamides aromatiques, de polyimides aromatiques en tant que poly(4,4-diphénylméthane-co-toluylènebenzophénontétra-carboxylimide) et/ou de polybenzimidazole, qui ont été extraits, avec le liquide ionique, de matière fibreuses textiles contenant des contaminants toxiques, dans laquelle les contaminants toxiques présentent une toxicité de 0,500 mg/kg à 15 000 mg/kg, mesurée selon la valeur LD 50 par voie orale (rat), et se présentent sous forme de solvants de filage restants qui proviennent de la fabrication de matières fibreuses textiles, et la solution polymère contient 70 à 95 % en poids de liquide ionique, 3 à 15 % en poids de polymères haute performance et plus de 0,01 % en poids et moins de 7 % en poids de contaminants toxiques.

2. Solution polymère coagulable selon la revendication 1, **caractérisée en ce que** les matières fibreuses textiles constituent des déchets de fibres textiles.

3. Solution polymère coagulable selon la revendication 1 ou 2, **caractérisée en ce qu'**elle contient 3 à 12 % en poids de polymères haute performance.

4. Solution polymère coagulable selon l'une quelconque des revendications 1 à 3, **caractérisée en ce que** la solution polymère contient 85 à 95 % en poids, en particulier 88 à 93 % en poids de liquide ionique, plus de 0,01 % en poids et moins de 5 % en poids de contaminants toxiques, de préférence de 0,01 à 3 % en poids et en particulier de 0,01 à 0,5 % en poids.

5. Solution polymère coagulable selon l'une quelconque des revendications 1 à 3, **caractérisée en ce qu'**elle présente une viscosité à cisaillement nul de 10 à 2 000 Pa.s aux fins du filage et une viscosité à cisaillement nul de 1 à 100 Pa.s aux fins de coagulation pour la fabrication de films, de membranes et de revêtements, dans laquelle la viscosité à cisaillement nul est mesurée à 70 °C avec un rhéomètre à plaque-plaque.

6. Solution polymère coagulable selon au moins l'une quelconque des revendications précédentes, **caractérisée en ce que** le liquide ionique représente un sel d'imidazolium, de pyridinium, de pyrazolium, de pyrimidinium, de pyrazinium et/ou de pyridazinium.

7. Solution polymère coagulable selon au moins l'une quelconque des revendications précédentes, **caractérisée en ce que** les contaminants toxiques sont présents sous forme de solvants de filage restants qui proviennent de la fabrication de matières fibreuses textiles, dans laquelle les solvants de filage restants se présentent en particulier sous forme de diméthylformamide (DMF), de diméthylacétamide (DMA), de tétraméthylurée (TMH), de diméthylsulfoxyde (DMSO), diméthylimidazolidinone (DMI) et/ou N-méthylpyrrolidone (NMP).

8. Solution polymère coagulable selon au moins l'une quelconque des revendications précédentes, **caractérisée en ce que** les contaminants toxiques ou les solvants de filage restants présentent une toxicité de 0,900 mg/kg à 7 500 mg/kg.

9. Procédé de traitement de matières fibreuses textiles ou des déchets de fibres textiles qui contiennent des polymères haute performance sous forme de m-aramides, de polyamides aromatiques, de polyimides aromatiques en tant que poly(4,4-diphénylméthane-co-toluylènebenzophénontétra-carboxylimide) et/ou que polybenzimidazoles ainsi que des contaminants toxiques d'une toxicité de 0,500 mg/kg à 15 000 mg/kg, mesurée selon la valeur LD 50 par voie orale (rat), pour obtenir une solution polymère coagulable ou filable, **caractérisé en ce que** les matières fibreuses textiles ou les déchets de fibres textiles, qui contiennent les solvants de filage restants, sont mélangés à un liquide ionique à température ambiante jusqu'à 170 °C, en particulier à une température de 85 à 130 °C, dans lequel le rapport entre la quantité de matières fibreuses textiles ou de déchets de fibres textiles et la quantité de liquide ionique est choisi de telle sorte que la solution polymère coagulable ou filable obtenue contient 70 à 95 % en poids, de préférence 85 à 95 % en poids et de manière particulièrement préférée de 88 à 93 % en poids de liquide ionique, 3 à 15 % en poids, en particulier 3 à 12 % en poids de polymères haute performance et plus de 0,01 % en poids et moins de 7 % en poids, de préférence de 0,01 à 3 % en poids et en particulier de 0,01 à 0,5 % en poids de contaminants toxiques.

10. Procédé selon la revendication 9, **caractérisé en ce que** les matières fibreuses textiles sont mélangées au liquide ionique sous l'effet de forces de cisaillement.

11. Procédé selon au moins l'une quelconque des revendications 9 ou 10, **caractérisé en ce que** sont utilisés des matières fibreuses ou des déchets de fibres textiles qui contiennent, en tant que contaminant toxique, du diméthylformamide (DMF), du diméthylacétamide (DMA), de la tétraméthylurée (TMH), du diméthylsulfoxyde (DMSO), du diméthylimidazolidinone (DMI) et/ou de la N-méthylpyrrolidone (NMP).

12. Procédé selon au moins l'une quelconque des revendications 9 et 11, **caractérisé en ce que** les polymères haute performance des matières fibreuses ou des déchets de fibres textiles contiennent les contaminants toxiques ou les solvants de filage en une telle quantité qu'après le mélange aux liquides ioniques et après le traitement ultérieur dans la solution polymère filable, ils sont présents en une quantité supérieure à 0,01 % en poids et inférieure à 7 % en poids, dans lequel les contaminants toxiques sont présents dans la solution polymère filable en particulier en une quantité de 0,01 à 5 % en poids, de préférence en une quantité de 0,01 à 3 % en poids, en particulier en une quantité de 0,01 à 0,05 % en poids.

13. Procédé selon au moins l'une quelconque des revendications 9 à 12, **caractérisé en ce que** les matières fibreuses ou les déchets de fibres textiles proviennent du filage de fibres, de la filature de fil, du tricotage, de la teinture et/ou de l'équipement ou constituent des déchets de confection, dans lequel les déchets de confection sont en particulier des déchets de découpe.

14. Procédé selon au moins l'une quelconques des revendications 9 à 13, **caractérisé en ce qu'**un sel d'imidazolium, de pyridinium, de pyrazolium, de pyrimidinium, de pyrazinium et/ou de pyridazinium est utilisé en tant que liquide ionique.

15. Procédé selon au moins l'une quelconque des revendications 9 à 14, **caractérisé en ce que** les composants insolubles présents dans la solution polymère filable sont séparés avant leur traitement ultérieur, dans lequel les composants insolubles sont en particulier des fibres de polypropylène, de polyéthylène téréphtalate, de polytétrafluoroéthylène, de p-aramide et/ou de carbone.

16. Procédé selon au moins l'une quelconque des revendications 9 à 15, **caractérisé en ce que** la solution polymère coagulable ou filable contient des matières polymères supplémentaires et/ou de la laine dissous pour obtenir des corps moulés à base de polymères mélangés lors du traitement ultérieur par coagulation ou filage, dans lequel les matériaux polymères supplémentaires sont présents en particulier sous forme de cellulose, de dérivés de cellulose, d'acétate de cellulose, de propionate, butyrate et/ou carbamate de cellulose.

17. Utilisation de la solution polymère filable selon au moins l'une quelconque des revendications 1 à 8 pour la fabrication de fibres par filage par voie humide ou par voie sèche-humide ou utilisation de la solution polymère coagulable selon au moins l'une quelconque des revendications 1 à 8 pour la fabrication de films, membranes et revêtements par coagulation par voie humide ou par voie sèche-humide, dans laquelle les fibres, films, membranes et revêtements obtenus présentent en particulier une teneur en contaminants toxiques inférieure à 20 ppm.
